# FASCICULE DE BREVET EUROPEEN

(11) **EP 3 702 275 B1**
(45) Date de publication et mention de la délivrance du brevet: **14.02.2024**
(21) Numéro de dépôt: 20159649.1
(22) Date de dépôt: 26.02.2020
(51) Int. Cl.: B64C 25/42, B64C 25/36

(54) **ROUE D'AÉRONEF POURVUE D'ÉCRANS THERMIQUES**
RAD EINES LUFTFAHRZEUGS, DAS MIT THERMISCHEN ABSCHIRMUNGEN AUSGESTATTET IST
AIRCRAFT WHEEL PROVIDED WITH THERMAL SCREENS

(30) Priorité: 28.02.2019 FR 1902060
(43) Date de publication de la demande: 02.09.2020
(73) Titulaire: Safran Landing Systems, 78140 Vélizy-Villacoublay (FR)
(72) Inventeur: MOLINE, Sylvain, 77550 MOISSY-CRAMAYEL (FR)
(74) Mandataire: Lavialle, Bruno François Stéphane

(56) Documents cités:
- CN-U- 206 579 836
- US-A- 4 856 619
- US-A1- 2009 071 763

## Description

La présente invention concerne le domaine des véhicules et plus particulièrement des aéronefs pourvus d'un train d'atterrissage à roues.

### Arrière-plan technologique

Une roue d'aéronef comprend habituellement un moyeu relié par un voile à une jante pourvue d'un pneumatique. Le moyeu a une surface externe qui s'étend en regard d'une surface interne de la jante et qui définit avec celle-ci un espace annulaire recevant un empilement de disques de frein. L'empilement comprend des disques de frein, dits disques rotors, comportant des encoches périphériques axiales recevant une portion de barrettes axiales solidaires chacune d'un tenon de roue s'étendant en saillie de la surface interne de la jante pour lier en rotation l'empilement de disques de frein et la jante.

Chacune des barrettes est en forme de gouttière et est engagée sur le tenon de roue et fixée par des vis engagées dans le tenon de roue au travers de la barrette. Entre les barrettes de chaque paire de barrettes adjacentes est monté un écran thermique en forme de segment annulaire qui est fixé à la jante par l'intermédiaire de vis engagées dans des taraudages ménagés dans les extrémités des barrettes.

Cependant, certaines roues sont pourvues d'une couronne portant des obstacles pour coopérer avec un engrenage entraîné en rotation par un motoréducteur. Il est connu, notamment dans le document FR-A-3022216, de fixer ladite couronne à la jante au moyen de vis engagées dans les trous susdits qui ne sont dès lors plus utilisables de manière simple pour la fixation des écrans thermiques.

Il est par ailleurs connu des documents US-A-4856619, US-A-2009/071763 et CN-A-206579836 différents modes de fixation d'écrans thermique sur une jante de roue, le dernier document présentant l'insertion d'un écran thermique entre deux barrettes après le montage de ces derniers sur la jante, la mise en place finale des écrans nécessitant une déformation importante de ces derniers.

### Objet de l'invention

Un des buts de l'invention est de faciliter la fixation des écrans thermiques.

### Bref exposé de l'invention

A cet effet, on prévoit, selon l'invention, une roue d'aéronef selon la revendication 1.

Ainsi, la fixation des écrans thermiques est assurée par des moyens de maintien élastique, formés par la portion de maintien et la butée de maintien qui peuvent être agencées pour être mises en œuvre sans nécessiter qu'un opérateur agisse directement sur ceux-ci.

Selon l'invention, la portion de maintien et la première butée sont agencées pour être mises en engagement lors d'un déplacement sensiblement radial de l'écran thermique par rapport à la jante.

Avantageusement alors, la roue comprend des deuxièmes butées, disposées chacune au voisinage d'une des extrémités de chaque barrette à l'opposé de la première butée et sur au moins un côté de ladite barrette, pour former un appui pour un bord de l'écran thermique.

Avantageusement encore, la deuxième butée est agencée pour autoriser un pivotement du bord opposé de l'écran thermique entre une position de montage dans laquelle l'écran thermique est incliné par rapport à la jante et une position d'utilisation dans laquelle l'écran thermique s'étend parallèlement à la jante et a sa portion de maintien coopérant avec la première butée, la portion de maintien et la première butée étant agencées pour autoriser le pivotement de l'écran thermique de la position de montage vers la position d'utilisation et s'opposer au pivotement de l'écran thermique de la position d'utilisation vers la position de montage.

L'écran thermique est donc mis en place en inclinant l'écran thermique pour amener en appui sa partie arrière contre la deuxième butée puis en faisant pivoter l'écran thermique jusqu'à ce qu'il soit maintenu parallèlement à la jante par les moyens élastiques.

De préférence, l'écran thermique est pourvu d'une patte élastiquement déformable formant la portion de maintien, la patte étant agencée pour s'escamoter élastiquement au contact de la première butée lors du pivotement de l'écran thermique de sa position de montage vers sa position d'utilisation.

Avantageusement alors, la roue comprend une troisième butée pour s'opposer à un déplacement de chaque deuxième écran thermique parallèlement aux barrettes lorsque l'écran thermique est en position d'utilisation et, de préférence, l'écran thermique et la jante sont pourvus de reliefs homologues qui sont en engagement relatif lorsque l'écran thermique est en position d'utilisation de manière à former la troisième butée.

Ainsi, la patte élastiquement déformable assure la retenue de l'écran thermique selon une direction radiale de la jante tandis que les reliefs homologues assurent la retenue de l'écran thermique selon une direction axiale de la jante.

Selon une caractéristique particulière, l'écran thermique est pourvu d'au moins un tampon élastiquement déformable prenant appui sur la jante.

Ceci permet de limiter la surface de l'écran thermique en contact avec la jante de manière à limiter une conduction de chaleur de l'écran thermique vers la jante. En outre, le tampon élastiquement déformable, s'il est contraint lorsque l'écran thermique est en position, permet de compenser les jeux de montage.

D'autres caractéristiques et avantages de l'invention ressortiront à la lecture de la description qui suit d'un mode de réalisation particulier et non limitatif de l'invention.

### Brève description des dessins

Il sera fait référence aux dessins annexés, parmi lesquels :
- La figure 1 est une vue partielle en perspective d'une roue d'aéronef selon un premier mode de réalisation ;
- La figure 2 est une vue en perspective d'une des barrettes de ladite roue ;
- La figure 3 est une vue partielle en coupe de ladite roue selon un plan diamétral de la roue ;
- La figure 4 est une vue partielle de côté d'une des barrettes et d'un des écrans thermiques, ce dernier étant représenté en coupe longitudinale ;
- La figure 5 est une vue partielle en perspective de la partie intérieure de la barrette ;
- La figure 6 est une vue partielle de la roue en coupe selon un plan axial de la roue de la figure 1 ;
- La figure 7 est une vue partielle de la roue en coupe selon un plan axial de la roue selon un deuxième mode de réalisation, qui est le mode de réalisation préféré de l'invention, au début de la mise en place d'un des écrans thermiques ;
- La figure 8 est une vue analogue à celle de la figure 7 de ladite roue pendant la mise en place de l'écran thermique ;
- La figure 9 est une vue analogue à celle de la figure 7 de ladite roue à la fin de la mise en place de l'écran thermique ;
- La figure 10 est une vue partielle en perspective de l'extrémité arrière de la barrette ;
- La figure 11 est une vue partielle de face de la roue, du côté des extrémités avant des barrettes ;
- La figure 12 est une vue de côté et en coupe partielle d'un clip de fixation de l'écran thermique selon le deuxième mode de réalisation ;
- La figure 13 est une vue en perspective du clip de fixation de l'écran thermique.

### Description détaillée de l'invention

En référence aux figures, l'invention concerne une roue d'aéronef, généralement désignée en 1, comprenant un moyeu, non visible sur les figures, relié par un voile 2 à une jante 3 destinée à être pourvue d'un pneumatique 100. La jante 3 comprend une surface intérieure 4 de forme cylindrique qui s'étend en regard d'une surface externe du moyeu pour définir avec celle-ci un espace annulaire destiné à recevoir, de manière connue en elle-même, un empilement de disques de frein. Ledit espace annulaire a une extrémité fermée par le voile 2 et une extrémité ouverte permettant l'introduction de l'empilement de disques dans l'espace annulaire. En saillie de la surface intérieure 4, s'étendent des tenons de roue 5 parallèles à un axe central de la jante 3. Ces tenons de roue 5 sont de forme sensiblement parallélépipédique avec une première extrémité 5.1 à l'opposé du voile 2 et une deuxième extrémité 5.2 du côté du voile 2.

La roue d'aéronef 1 comprend des barrettes 10 fixées chacune sur un des tenons de roue 5. Les barrettes 10 servent de manière connue en elle-même à guider des disques rotors qui ont des encoches périphériques axiales recevant chacune un tronçon d'une des barrettes 10. Les barrettes 10 sont agencées pour assurer une reprise de couple entre les disques rotor et les tenons de roue 5 de la jante 3.

Les barrettes 10 ont ici une forme en gouttière ayant une première extrémité 10.1 à l'opposé du voile 2 et une deuxième extrémité 10.2 du côté du voile 2. Chaque barrette 10 comprend deux parois latérales 11 reliées l'une à l'autre par une paroi de fond 12. La paroi de fond 12 est pourvue, du côté de la première extrémité 10.1 d'un trou 13 permettant le passage d'une vis 14 engagée dans un taraudage ménagé dans le tenon de roue 5 selon une direction radiale de la jante 3.

La roue d'aéronef 1 comprend en outre des écrans thermiques 20 montés chacun entre les barrettes 10 de chaque paire de barrettes 10 adjacentes. Les écrans thermiques 20 sont en forme de segment annulaire ayant deux surfaces principales 21.1, 21.2 qui sont incurvées autour d'un axe correspondant à l'axe central de la roue 1 lorsque les écrans thermiques 20 sont en position dans la jante 3. La surface principale 21.2 est tournée vers la surface intérieure 4 de la jante 3 tandis que la surface principale 21.1 est tournée vers le moyeu. Les surfaces principales 21.1, 21.2 sont reliées l'une à l'autre, d'une part, par deux premiers bords 22 opposés l'un à l'autre et parallèles aux barrettes 10 et, d'autre part, par deux bords 23 (ou deuxième bord et troisième bord), opposés l'un à l'autre, qui sont incurvés autour dudit axe et qui s'étendent selon une direction circonférentielle de la jante 3. L'un des bords 23, dit bord avant et référencé 23.1, se trouve au voisinage des extrémités 5.1 des tenons de roue 5 et l'autre des bords 23, dit bord arrière et référencé 23.2, se trouve au voisinage des extrémités 5.2 des tenons de roue 5 lorsque l'écran thermique 20 est monté sur la jante 3. De préférence, chaque écran thermique 20 comprend deux plaques bombées jointes par les bords 22, 23 et dont les faces extérieures forment les surfaces principales 21.1, 21.2. La surface principale 21.2 faisant face à la surface intérieure 4 de la jante 3 est pourvue de tampons élastiquement déformables 24 s'étendant en saillie de ladite surface principale 21.2 pour prendre appui contre la surface intérieure 4 de manière à compenser les jeux de montage et éviter un transfert de chaleur par conduction de l'écran thermique 20 vers la surface intérieure 4 de la jante 3.

Chaque écran thermique 20 comporte des portions en appui contre des butées solidaires de la jante 3 de manière à maintenir élastiquement les écrans thermiques 20 en position sur la jante 3.

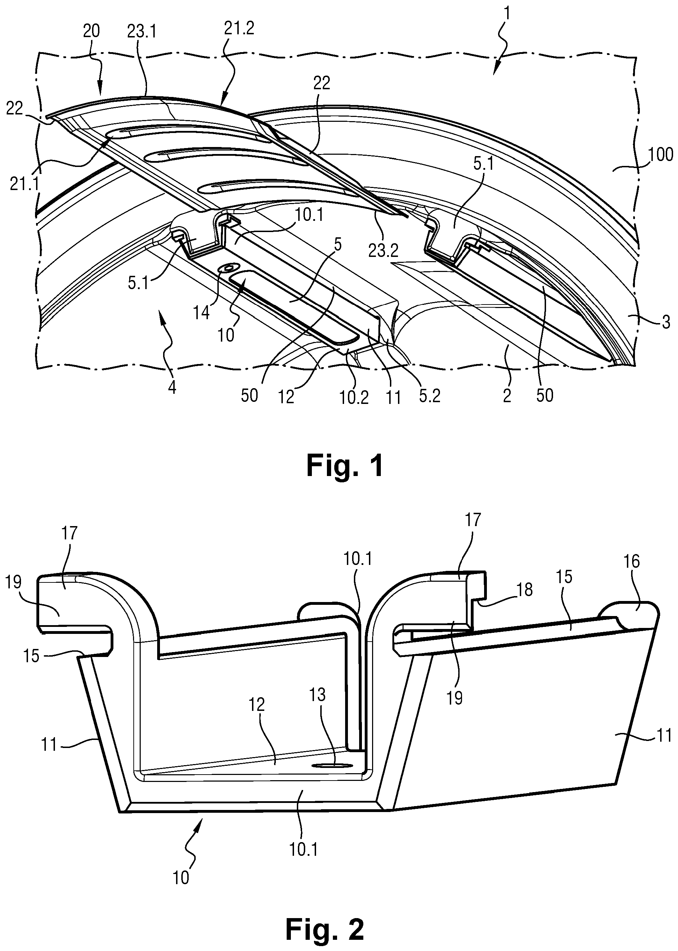

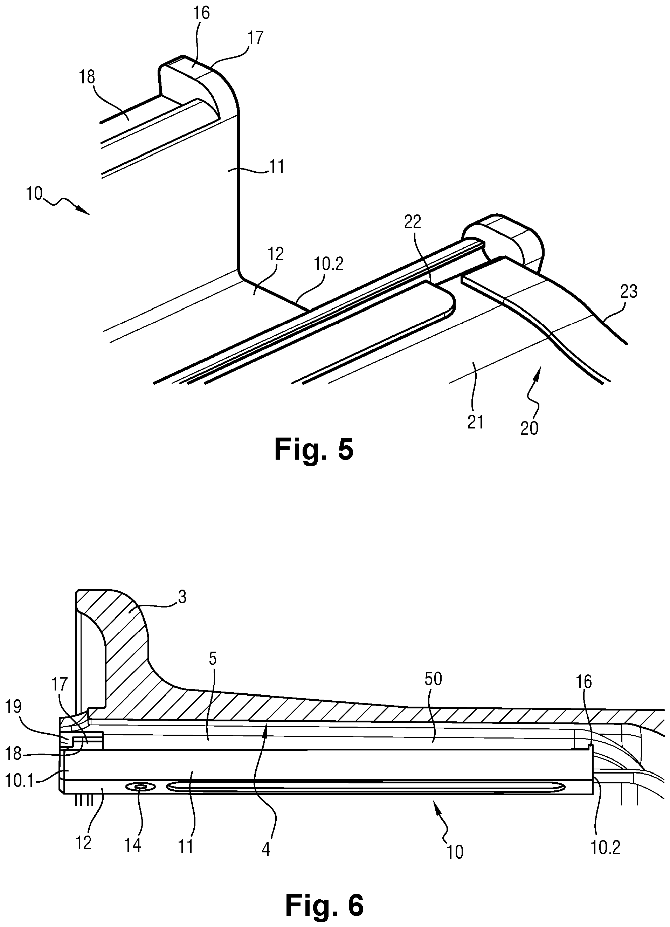

Selon le premier mode de réalisation qui ne fait pas partie de l'invention, et conformément aux figures 1 à 6, chaque barrette 10 définit, le long de chacun des deux côtés du tenon de roue 5 qu'elle équipe, au moins une partie de rainure recevant un des bords 22 d'un des écrans thermiques 20. Plus précisément, chacune des parois latérales 11 a ici un bord libre 15 s'étendant en regard de la surface intérieure 4 de la jante 3 et définissant avec celle-ci une rainure 50 (visible sur les figures 1 et 6). La rainure 50 a une extrémité ouverte délimitée par un rebord 17 en forme de moustache s'étendant en saillie de la première extrémité 10.1 à l'opposé de la paroi de fond 12 et vers l'extérieur de la barrette 10. Chaque rebord 17 a une surface 18 s'étendant parallèlement à la paroi de fond 12 et en regard d'une portion terminale du bord 15 pour délimiter, parallèlement au tenon de roue 5, un couloir d'entrée dans la rainure 50 pour le bord 22 de l'écran thermique 20. Une butée 19 (ou première butée) s'étend en saillie de la surface 18 en laissant avec le bord 15 un passage pour le bord 22 de l'écran thermique 20.

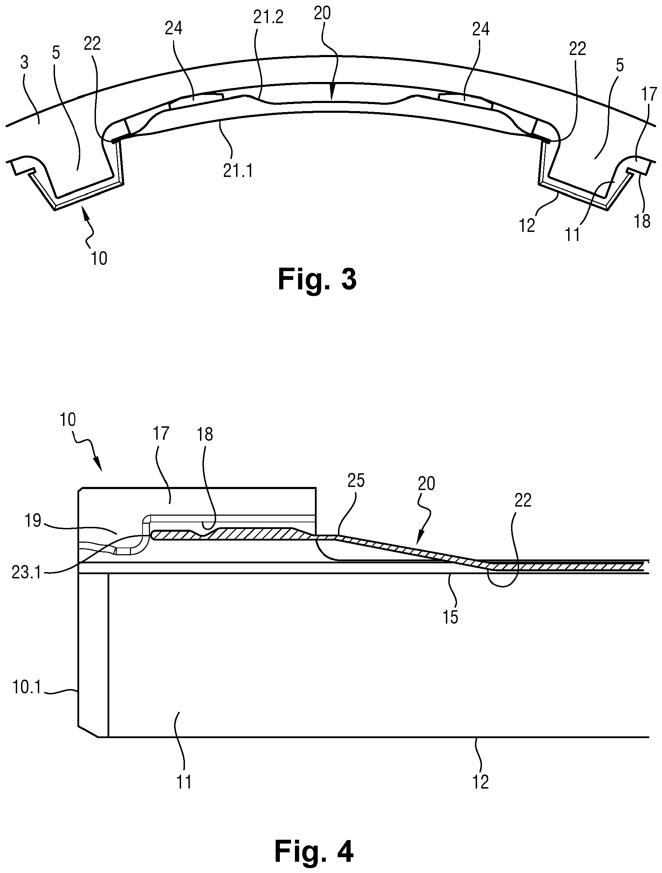

Les bords 22 de chaque écran thermique 20 comprennent, au voisinage du bord avant 23.1, un ressaut 25, visible sur la figure 4, formé par une incurvation autour d'un axe parallèle à une direction circonférentielle de la jante 3, de telle manière que le bord avant 23.1 au voisinage des ressauts 25 prenne appui contre les butées 19 pour s'opposer à une extraction de l'écran thermique 20 hors de la rainure 50 et que le ressaut 25 soit élastiquement déformable vers un état aplati dans lequel le bord avant 23.1 échappe à la butée 19. Dans un état de repos, on comprend que le bord avant 23.1 a au moins des portions voisines des bords 22 qui sont décalées, selon une direction normale aux surfaces principales 21.1, 21.2, par rapport au bord arrière 23.2. Dans l'état aplati, ce décalage du bord avant 23.1, par rapport au bord arrière 23.2, est moindre voire nul.

La rainure 50 comporte, à l'opposé du rebord 17 définissant l'extrémité ouverte de la rainure 50, une extrémité au moins partiellement fermée par un rebord 16 de la barrette 10 formant une deuxième butée, axiale, pour le bord arrière 23.2 de l'écran thermique 20.

On comprend que le montage des écrans thermiques 20 dans la roue 1 débute par la fixation des barrettes 10. Chaque barrette 10 est disposée à cheval sur un des tenons de roue 5 et la vis 14 est vissée au travers de la paroi de fond 12 dans le tenon de roue 5 pour maintenir en position la barrette 10.

Chacun des écrans thermiques 20 est alors engagé entre les barrettes 10 de chaque paire de barrettes 10 adjacentes. Pour ce faire, les deux bords 22 sont introduits entre les rebords 17, dans le passage laissé libre par les butées 19, et l'écran thermique 20 est glissé dans la rainure 50 jusqu'à venir en butée contre le rebord 16. Lors de ce mouvement, il est nécessaire de forcer pour déformer élastiquement le ressaut 25 afin de l'aplatir et lui faire passer la butée 19. Dès la butée 19 passée, le ressaut 25 reprend élastiquement sa forme de sorte que le bord avant 23.1 passe derrière la butée 19 qui s'oppose à une extraction de l'écran thermique 20 hors de son logement formé par les barrettes 10.

Ainsi, dans sa position d'utilisation, l'écran thermique 20 s'étend entre le rebord 16 et la butée 19 qui s'opposent à un mouvement axial de l'écran thermique 20 et entre les bords 15 et la surface intérieure 4 de la jante 3 qui s'opposent à un mouvement radial de l'écran thermique 20.

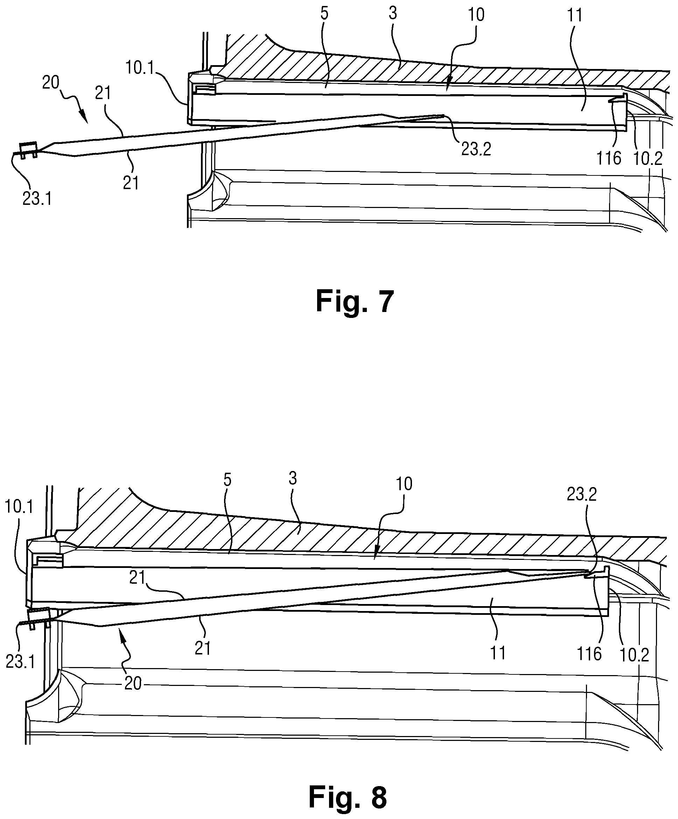

Selon le deuxième mode de réalisation, et conformément aux figures 7 à 14, la roue 1 comprend des butées, disposées chacune au voisinage d'une des extrémités 10.2 de chaque barrette 10, pour former un appui pour le bord arrière 23.2 de l'écran thermique 20.

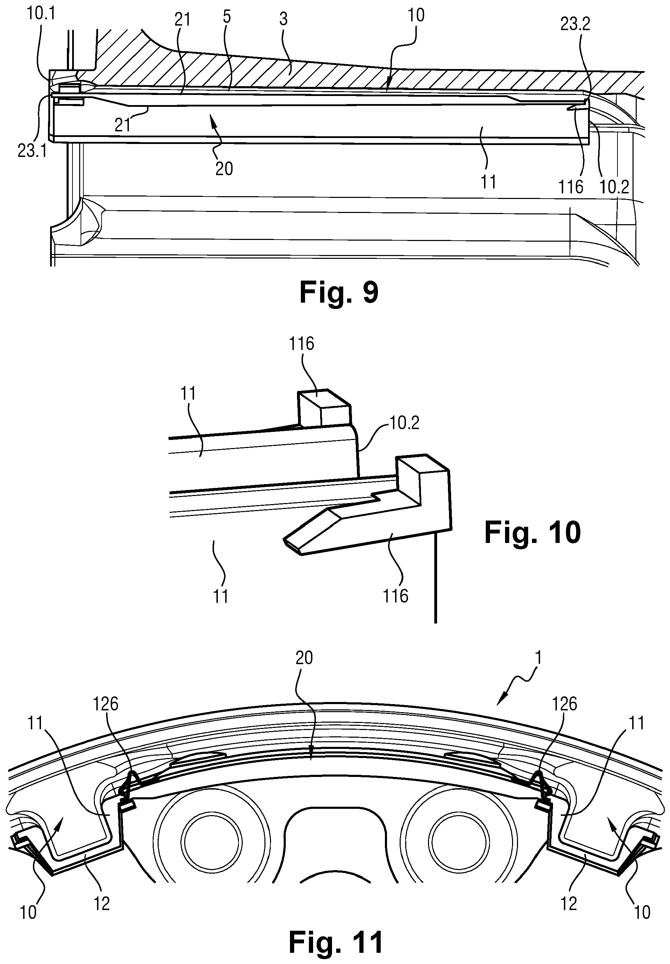

Plus précisément, lesdites butées sont formées chacune par un rebord 116 (ou deuxième butée) qui s'étend en saillie du bord 15 de l'extrémité 10.2 et est recourbé vers l'extrémité 10.1. Chaque rebord 116 est agencé pour autoriser un pivotement du bord avant 23.1 de l'écran thermique 20 entre une position de montage dans laquelle l'écran thermique 20 est incliné par rapport à la jante 3 (figure 8) et une position d'utilisation dans laquelle l'écran thermique 20 s'étend parallèlement à la jante 3 (figure 9).

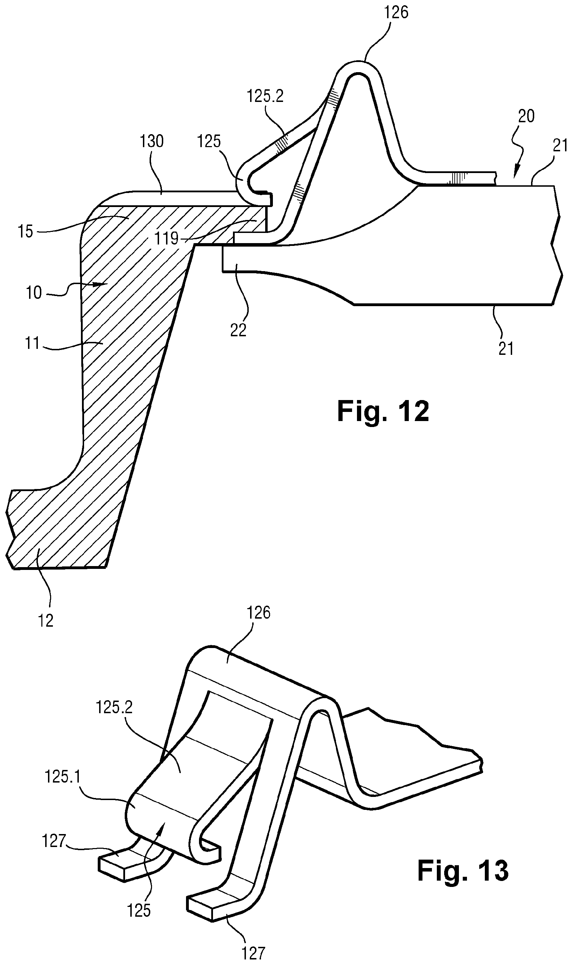

Chaque écran thermique 20 est pourvu d'une patte 125 élastiquement déformable, présentée sur les figures 12 et 13, formant la portion de maintien et destinée à coopérer avec un rebord 119 (formant la première butée dans ce mode de réalisation) s'étendant depuis le bord libre 15 de chaque paroi latérale 11 en saillie latérale vers l'extérieur de chaque barrette 10. La patte 125 est ici formée d'une languette découpée dans un clip triangulaire 126 ayant une base fixée sur la surface 21.2 tournée vers la surface intérieure 4 de la jante 3. La patte 125 est agencée pour s'escamoter élastiquement au contact du rebord 119 lors du pivotement de l'écran thermique 20 de sa position de montage vers sa position d'utilisation et pour s'opposer au pivotement de l'écran thermique 20 de la position d'utilisation vers la position de montage. A cette fin, la patte 125 a ici une portion terminale recourbée 125.1 pour prendre appui contre une face arrière du rebord 119 lorsque l'écran thermique 20 est dans sa position d'utilisation (figure 12) et une portion inclinée 125.2 de liaison au clip 126 qui forme une rampe sur laquelle une face avant du rebord 119 prend appui et glisse lors du pivotement de l'écran thermique 20 de sa position de montage à sa position d'utilisation en provoquant la déformation élastique de la patte 125 jusqu'à laisser passer le rebord 119.

La roue 1 comprend des troisièmes butées pour s'opposer à un déplacement de chaque écran thermique 20 parallèlement aux tenons de roue 5 lorsque l'écran thermique 20 est en position d'utilisation. A cette fin, chaque écran thermique 20 et chaque barrette 10 sont pourvus de reliefs homologues qui sont en engagement relatif lorsque l'écran thermique 20 est en position d'utilisation.

Plus précisément ici, lorsque l'écran thermique 20 est en position d'utilisation, la portion terminale recourbée 125.1 de la patte 125 est reçue entre deux reliefs 130 s'étendant en saillie de la face arrière du rebord 119 (un seul relief 130 est visible sur la figure 12) .

En variante, il est possible de prévoir un relief sur la face avant du rebord 119 de telle manière que ledit relief soit logé entre deux bras 127 du clip 126 s'étendant de part et d'autre de la patte 125.

Bien entendu, l'invention n'est pas limitée au mode de réalisation décrit mais englobe toute variante entrant dans le champ de l'invention telle que définie par les revendications.

En particulier, la structure et la forme de la barrette 10 et/ou la structure et la forme de l'écran thermique 20 peuvent être différentes de celles décrites et/ou représentées. On appelle « barrette », tout élément, d'une seule pièce avec la jante ou rapporté sur celle-ci, ayant notamment comme fonction de transmettre un effort entre les disques et la jante. De même, les tenons de roue peuvent avoir une forme différente de celle décrite et être d'une seule pièce avec la jante ou rapportés sur celle-ci. La barrette et le tenon de roue peuvent être une seule et même pièce.

Tout ou partie des butées peuvent être formées par des reliefs de la jante 3 y compris les tenons de roue 5. Ainsi, bien que, dans le mode de réalisation décrit, la butée 19 soit formée par un rebord de la barrette 10, la butée pourrait être formée par une saillie de la jante 3. Il en est de même pour les butées 16, 116 et 119. Il est néanmoins plus avantageux de prévoir ces butées sur les barrettes 10 car cela limite les contacts entre les écrans thermiques 20 et la jante 3 et donc les transferts de chaleur par conduction.

La fixation des écrans thermiques 20 peut être assurée par plus de deux clips 126, par exemple quatre clips disposés aux quatre coins de chaque écran thermique 20, les deux bords 23 de l'écran thermique 20 étant alors approchés de la surface intérieure 4 de la jante 3 selon des directions sensiblement radiales de la jante 3.

Bien que la fixation de chaque écran thermique 20 soit ici assurée par des moyens identiques des deux côtés de l'écran thermique 20, il est possible d'avoir des moyens différents. L'écran thermique peut par exemple avoir un bord 22 reçu dans une rainure ménagée le long de la barrette 10 de droite et un bord 22 pourvu de clip 126 pour coopérer avec des butées 119 agencées sur la barrette 10 de gauche. Les moyens de fixation des deux modes de réalisation peuvent par exemple aussi être mixés pour une même jante 3.

Bien que, dans les modes de réalisation décrits, la barrette 10 définisse la rainure 50 avec une partie de la jante 3, la rainure 50 pourrait être formée en totalité par la barrette 10 en rainurant chacune des parois latérales 11.

Chaque écran thermique 20 peut être pourvu d'un ou plusieurs tampons élastiquement déformables 24 prenant appui sur la jante 3, ou en être dépourvu. Dans ce cas, on positionnera les moyens de positionnement radial des écrans thermiques 20 de manière que ceux-ci soient espacés de la surface inférieure de la jante 3 afin de limiter les transferts thermiques par conduction.

La présence d'une troisième butée peut-être associée, en complément, aux reliefs homologues pour s'opposer à un déplacement de chaque écran thermique 20 parallèlement aux barrettes 10.

La jante 3 peut être en une ou plusieurs parties.

## Revendications

1. Roue (1) d'aéronef, comprenant un moyeu relié à une jante (3) pourvue d'un pneumatique (100), le moyeu ayant une surface extérieure qui s'étend en regard d'une surface intérieure (4) de la jante (3) et qui définit avec celle-ci un espace annulaire pour recevoir un empilement de disques de frein comportant des disques rotors ayant des encoches périphériques axiales recevant chacune un tronçon d'une barrette (10) axiale s'étendant en saillie de la surface intérieure (4) de la jante (3), et un écran thermique (20) en forme de segment annulaire étant monté entre les barrettes (10) de chaque paire de barrettes adjacentes, chaque écran thermique (20) comportant au moins une portion de maintien en appui contre au moins une première butée (19, 119) solidaire de la jante (3) de manière à assurer un maintien élastique de l'écran thermique (20) en position sur la jante (3), **caractérisée en ce que** la portion de maintien et la première butée (119) sont agencées pour être mises en engagement lors d'un déplacement sensiblement radial de l'écran thermique (20) par rapport à la jante (3).

2. Roue (1) selon la revendication 1, comprenant des deuxièmes butées (116), disposées chacune au voisinage d'une des extrémités (5.1) de chaque barrette (10) à l'opposé de la première butée (119) et sur au moins un côté de ladite barrette (10), pour former un appui pour un premier bord (23.2) de l'écran thermique (20).

3. Roue (1) selon la revendication 2, dans laquelle chaque deuxième butée (116) est agencée pour autoriser un pivotement d'un deuxième bord (23.1) de l'écran thermique (20) opposé au premier bord (23.2) entre une position de montage dans laquelle l'écran thermique (20) est incliné par rapport à la jante (3) et une position d'utilisation dans laquelle l'écran thermique (20) s'étend parallèlement à la jante (3) et a sa portion de maintien (125) coopérant avec la première butée (119), la portion de maintien (125) et la première butée (119) étant agencées pour autoriser le pivotement de l'écran thermique (20) de la position de montage vers la position d'utilisation et s'opposer au pivotement de l'écran thermique (20) de la position d'utilisation vers la position de montage.

4. Roue (1) selon la revendication 3, dans laquelle l'écran thermique (20) est pourvu d'une patte élastiquement déformable formant la portion de maintien (125), la patte étant agencée pour s'escamoter élastiquement au contact de la première butée (119) lors du pivotement de l'écran thermique (20) de sa position de montage vers sa position d'utilisation.

5. Roue (1) selon la revendication 4, dans laquelle la patte déformable est solidaire d'un clip (126) rapporté sur l'écran thermique (20).

6. Roue (1) selon la revendication 5, dans laquelle le clip (126) et la jante (3) portent des reliefs homologues qui sont en engagement relatif, lorsque l'écran thermique (20) est en position d'utilisation, pour s'opposer à un déplacement de chaque écran thermique (20) parallèlement aux barrettes (10).

7. Roue (1) selon l'une quelconque des revendications précédentes, comprenant une troisième butée pour s'opposer à un déplacement de chaque écran thermique (20) parallèlement aux barrettes (10) lorsque l'écran thermique (20) est en position d'utilisation.

8. Roue (1) selon la revendication 7, dans laquelle l'écran thermique (20) et la jante (3) sont pourvus de reliefs homologues qui sont en engagement relatif lorsque l'écran thermique (20) est en position d'utilisation de manière à former la troisième butée.

9. Roue (1) selon l'une quelconque des revendications précédentes, dans laquelle la première butée (19, 119) est solidaire de la barrette (10).

10. Roue (1) selon l'une quelconque des revendications précédentes, dans laquelle l'écran thermique (20) est pourvu d'au moins un tampon élastiquement déformable (24) prenant appui sur la jante (3) .

## Patentansprüche

1. Luftfahrzeugrad (1), umfassend eine Nabe, die mit einer Felge (3) verbunden ist, die mit einem Reifen (100) versehen ist, wobei die Nabe eine Außenfläche hat, die sich gegenüber einer Innenfläche (4) der Felge (3) erstreckt und mit dieser einen ringförmigen Raum definiert, um einen Stapel von Bremsscheiben aufzunehmen, der Rotorscheiben umfasst, die axiale Umfangskerben haben, die jeweils einen Abschnitt eines axialen Stabs (10) aufnehmen, der von der Innenfläche (4) der Felge (3) vorsteht, und wobei ein Wärmeschild (20) in Form eines ringförmigen Segments zwischen den Stäben (10) jedes Paares von angrenzenden Stäben montiert ist, wobei jeder Wärmeschild (20) mindestens einen Halteabschnitt in Anlage an mindestens einem ersten Anschlag (19, 119) umfasst, der fest mit der Felge (3) verbunden ist, um ein elastisches Halten des Wärmeschilds (20) in Position an der Felge sicherzustellen, **dadurch gekennzeichnet, dass** der Halteabschnitt und der erste Anschlag (119) ausgebildet sind, bei einer im Wesentlichen radialen Bewegung des Wärmeschilds (20) in Bezug auf die Felge (3) in Eingriff gebracht zu werden.

2. Rad (1) nach Anspruch 1, umfassend zweite Anschläge (116), die jeweils in der Nähe eines der Enden (5.1) jedes Stabs (10) entgegengesetzt zum ersten Anschlag (119) und auf mindestens einer Seite des genannten Stabes (10) angeordnet sind, um eine Anlage für einen ersten Rand (23.2) des Wärmeschilds (20) zu bilden.

3. Rad (1) nach Anspruch 2, bei dem jeder zweite Anschlag (116) ausgebildet ist, ein Verschwenken eines zweiten Rands (23.1) des Wärmeschilds, der dem ersten Rand (23.2) entgegengesetzt ist, zwischen einer Montageposition, in der der Wärmeschild (20) in Bezug auf die Felge (3) geneigt ist, und einer Gebrauchsposition, in der sich der Wärmeschild (20) parallel zur Felge (3) erstreckt und sein Halteabschnitt (125) mit dem ersten Anschlag (119) zusammenwirkt, zu gestatten, wobei der Halteabschnitt (125) und der erste Anschlag (119) ausgebildet sind, das Verschwenken des Wärmeschilds (20) von der Montageposition in die Gebrauchsposition zu gestatten und sich dem Verschwenken des Wärmeschilds (20) von der Gebrauchsposition in die Montageposition zu widersetzen.

4. Rad (1) nach Anspruch 3, bei dem der Wärmeschild (20) mit einer elastisch verformbaren Lasche versehen ist, die den Halteabschnitt (125) bildet, wobei die Lasche ausgebildet ist, sich bei einem Kontakt mit dem ersten Anschlag (119) beim Verschwenken des Wärmeschilds (20) von seiner Montageposition in seine Gebrauchsposition elastisch zurückzuziehen.

5. Rad (1) nach Anspruch 4, bei dem die verformbare Lasche fest mit einem Clip (126) verbunden ist, der an dem Wärmeschild (20) angebracht ist.

6. Rad (1) nach Anspruch 5, bei dem der Clip (126) und die Felge (3) homologe Reliefelemente tragen, die in relativem Eingriff stehen, wenn der Wärmeschild (20) in der Gebrauchsposition ist, um sich einer Bewegung jedes Wärmeschilds (20) parallel zu den Stäben (10) zu widersetzen.

7. Rad (1) nach einem der vorhergehenden Ansprüche, umfassend einen dritten Anschlag, um sich einer Bewegung jedes Wärmeschilds (20) parallel zu den Stäben (10) zu widersetzen, wenn der Wärmeschild (20) in der Gebrauchsposition ist.

8. Rad (1) nach Anspruch 7, bei dem der Wärmeschild (20) und die Felge (3) mit homologen Reliefelementen versehen sind, die in relativem Eingriff stehen, wenn der Wärmeschild (20) in der Gebrauchsposition ist, um den dritten Anschlag zu bilden.

9. Rad (1) nach einem der vorhergehenden Ansprüche, bei dem der erste Anschlag (19, 119) fest mit dem Stab (10) verbunden ist.

10. Rad (1) nach einem der vorhergehenden Ansprüche, bei dem der Wärmeschild (20) mit mindestens einem elastisch verformbaren Polster (24) versehen ist, das an der Felge (3) zur Anlage kommt.

## Claims

1. An aircraft wheel (1) comprising a hub connected to a rim (3) provided with a tire (100), the hub having an outer surface that extends facing an inner surface (4) of the rim (3) and that co-operates therewith to define an annular space for receiving a stack of brake disks including rotor disks having axial peripheral notches, each notch receiving a segment of an axial bar (10) extending projecting from the inner surface (4) of the rim (3), and respective heat shields (20), each in the form of an annular segment, being mounted between the two bars (10) of respective pairs of adjacent bars, each heat shield (20) including at least one holder portion bearing against at least one first abutment (19, 119) secured to the rim (3) in order to hold the heat shield (20) in position on the rim (3) elastically, the wheel being **characterized in that** the holder portion and the first abutment (119) are arranged to be put into engagement while the heat shield (20) is moving substantially radially relative to the rim (3).

2. A wheel (1) according to claim 1, including second abutments (116), each arranged in the vicinity of one of the ends (5.1) of each bar (10) remote from the first abutment (119) and on at least one side of said bar (10) in order to form a bearing surface against which a second edge (23.2) of the heat shield (20) can bear.

3. A wheel (1) according to claim 2, wherein each second abutment (116) is arranged to allow a third edge (23.1) of the heat shield (20) that is remote from the second edge (23.2) to pivot between an assembly position in which the heat shield (20) slopes relative to the rim (3) and a utilization position in which the heat shield (20) extends parallel to the rim (3) and its holder portion (125) co-operating with the first abutment (119), the holder portion (125) and the first abutment (119) being arranged to allow the heat shield (20) to pivot from the assembly position towards the utilization position and to oppose pivoting of the heat shield (20) from the utilization position towards the assembly position.

4. A wheel (1) according to claim 3, wherein the heat shield (20) is provided with an elastically deformable nose forming the holder portion (125), the nose being arranged to retract elastically on contact with the first abutment (119) while the heat shield (20) is pivoting from its assembly position towards its utilization position.

5. A wheel (1) according to claim 4, wherein the deformable nose is secured to a clip (126) fitted on the heat shield (20).

6. A wheel (1) according to claim 5, wherein the clip (126) and the rim (3) carry corresponding portions in relief that are mutually engaged when the heat shield (20) is in the utilization position so as to oppose any movement of each heat shield (20) parallel to the bars (10) .

7. A wheel (1) according to any preceding claim, including a third abutment to oppose any movement of each shield (20) parallel to the bars (10) when the heat shield (20) is in the utilization position.

8. A wheel (1) according to claim 7, wherein the heat shield (20) and the rim (3) are provided with corresponding portions in relief that are mutually engaged when the heat shield (20) is in the utilization position, thereby forming the third abutment.

9. A wheel (1) according to any preceding claim, wherein the first abutment (19, 119) is secured to the bar (10).

10. A wheel (1) according to any preceding claim, wherein the heat shield (20) is provided with at least one elastically deformable pad (24) bearing against the rim (3) .
